# EUROPÄISCHE PATENTSCHRIFT

(11) **EP 4 217 182 B1**
(45) Veröffentlichungstag und Bekanntmachung des Hinweises auf die Patenterteilung: **07.08.2024**
(21) Anmeldenummer: 21778498.2
(22) Anmeldetag: 22.09.2021
(51) Int. Cl.: B29C 64/209, B29C 64/227, B29C 64/393, B22F 12/53, B22F 10/30, B22F 12/00, B29C 64/106, B29C 64/118

(54) **VERFAHREN UND VORRICHTUNG ZUR ADDITIVEN HERSTELLUNG EINES ERZEUGNISSES**
METHOD AND APPARATUS FOR THE ADDITIVE MANUFACTURE OF A PRODUCT
PROCÉDÉ ET APPAREIL DE FABRICATION ADDITIVE D'UN PRODUIT

(30) Priorität: 23.09.2020 DE 102020124782
(43) Veröffentlichungstag der Anmeldung: 02.08.2023
(73) Patentinhaber: KraussMaffei Technologies GmbH, 85599 Parsdorf (DE)
(72) Erfinder: BIERBAUMER, Andreas, 83134 Prutting (DE); HUMMEL, Daniel, 72800 Eningen unter Achalm (DE); NGUYEN, Alexander, 72760 Reutlingen (DE); HOSSINGER, Max, 72555 Metzingen (DE); ININGER, Jan, 72770 Reutlingen (DE)
(74) Vertreter: Wilhelm, Ludwig
(86) Internationale Anmeldenummer: PCT/EP2021/076077
(87) Internationale Veröffentlichungsnummer: WO 2022/063837

(56) Entgegenhaltungen:
- EP-A1- 3 156 216
- WO-A1-2017/206127
- WO-A1-2018/184797

## Beschreibung

Die Erfindung betrifft ein Verfahren zur additiven Herstellung eines Erzeugnisses, wobei eine Schmelze über eine 3D-Druckdüse ausgetragen und die Schmelze in Form eines Schmelzestrangs zur Ausbildung des Erzeugnisses auf einem Drucktisch abgelegt wird, wobei die 3D-Druckdüse und/oder der Drucktisch gemäß einem für das Erzeugnis spezifischen Computerprogramm im Raum verfahren werden. Die Erfindung betrifft des Weiteren eine Vorrichtung zur Durchführung dieses Verfahrens.

Verfahren und Vorrichtungen zur additiven Herstellung eines Erzeugnisses sind in vielfältiger Ausgestaltung aus dem Stand der Technik bekannt. Üblicherweise wird ein solches Verfahren auch als 3D-Druck bezeichnet und eine hierfür geeignete Vorrichtung auch als 3D-Drucker.

Aus dem Stand der Technik sind 3D-Drucker für die additive Herstellung von relativ großen Erzeugnissen in verschiedenen Ausgestaltungen bekannt (WO2018/044386A1, EP3112133A1). Je nach Ausführungsform können die hierbei verwendeten 3D-Druckköpfe ein beträchtliches Gewicht aufweisen. Es sind 3D-Drucker bekannt, bei welchem die 3D-Druckköpfe ein Gewicht von bis zu 100kg aufweisen können. Das große Gewicht eines solchen 3D-Druckkopfes führt bei Beschleunigungsfahrten zu hohen Massenträgheiten, welche Vibrationen hervorrufen können. Dies führt in der gedruckten Oberfläche zu Rattermarken, welche eine schlechte Druckqualität zur Folge haben. Zur Vermeidung dieser Nachteile ist es bekannt, die Druckgeschwindigkeit zu reduzieren und/oder einen 3D-Drucker mit einer steifen Rahmenbauweise zu verwenden. Diese Maßnahmen führen einerseits zu einem langsamen Aufbau des Erzeugnisses und andererseits zu einem sehr steif ausgelegten und daher teuren 3D-Drucker.

Aus dem Dokument DE102016223244A1 ist ein Verfahren zur additiven Herstellung eines Erzeugnisses bekannt, wobei Kunststoffschmelze aus einer Nadelverschlussdüse auf einen Drucktisch ausgetragen wird. Die Düsennadel, auch Nadelventil genannt, wird durch einen Aktor angetrieben, wodurch die Nadelverschlussdüse geöffnet und geschlossen werden kann. In der geöffneten Stellung wird Kunststoffschmelze auf den Drucktisch ausgetragen. Bei diesem Verfahren ist die Geometrie des Schmelzestrangs durch die Geometrie der Austrittsöffnung der Nadelverschlussdüse vorgegeben und somit beschränkt auf einen Schmelzestrang mit einem kreisförmigen Querschnitt.

Ein ähnliches Verfahren ist aus dem Dokument US2017/0122322A1 bekannt. Im Unterschied zum vorgenannten Stand der Technik ist die Düsennadel an ihrer kegelförmig ausgebildeten Spitze mit einer schraubenförmig umlaufenden Vertiefung nach Art einer Extruderschnecke ausgebildet und kann zudem rotatorisch angetrieben werden. Über den Abstand zwischen der Spitze und der Düsenöffnung kann der Volumenstrom an austretendem 3D-Druckmaterial eingestellt bzw. geregelt werden.

WO 2018/184797 A1 offenbart ebenfalls ein Verfahren und eine Vorrichtung zur additiven Herstellung eines Erzeugnisses.

Ausgehend von dem eingangs genannten Stand der Technik liegt der Erfindung die Aufgabe zugrunde, ein Verfahren und eine Vorrichtung anzugeben, mit welcher ein Erzeugnis mittels 3D-Druck relativ schnell hergestellt werden kann, wobei ein 3D-Druckkopf mit einem vergleichsweise geringen Gewicht verwendet werden kann.

Die Lösung dieser Aufgaben erfolgt durch ein Verfahren mit den Merkmalen von Anspruch 1 und mit einer Vorrichtung mit den Merkmalen von Anspruch 8. Vorteilhafte Ausgestaltungen und Weiterentwicklungen sind in den abhängigen Ansprüchen angegeben.

Gemäß einem Kerngedanken der vorliegenden Erfindung erfolgt eine kontinuierliche Austragsregelung der Schmelze beim 3D-Druck aus der Druckdüse mit einer bestimmten Geometrie bzw. einem bestimmten Düsenquerschnitt mittels einer Düsennadel einer Nadelverschlussdüse. Die Nadelverschlussdüse weist ein Gehäuse und eine darin verschiebbare Düsennadel auf. Über diese Nadelverschlussdüse wird die Schmelze der 3D-Druckdüse zugeleitet. Dabei wird die Düsennadel während der Durchführung des Druckvorgangs zwischen einer geschlossenen Stellung, in welcher die Düsennadel an einer mit der 3D-Druckdüse in Fluidverbindung stehenden Austrittsöffnung anliegt und diese verschließt und einer geöffneten Stellung, in welcher die Düsennadel einen vorgebbaren Abstand zu der Austrittsöffnung des Gehäuses aufweist, verfahren. Hierbei ist für die additive Herstellung des Erzeugnisses ein aus der 3D-Druckdüse austretender Volumenstrom an Schmelze vorgegeben, welcher durch die Gestalt der Austrittsöffnung der 3D-Druckdüse und somit der Geometrie des abzulegenden Schmelzestrangs einerseits und die Verfahrgeschwindigkeit der 3D-Druckdüse und/oder des Drucktischs andererseits vorgegeben ist. Die Düsennadel wird während des Druckvorgangs in der Weise zwischen der geschlossenen Stellung und der geöffneten Stellung verfahren, dass während der additiven Herstellung des Erzeugnisses der vorgegebene Volumenstrom an aus der 3D-Druckdüse austretender Schmelze aufrechterhalten wird.

Gemäß einer bevorzugten Ausführungsform kann zur Regelung des Volumenstroms der Druck der Schmelze vor Eintritt der Schmelze in die Nadelverschlussdüse und der Druck der Schmelze nach Austritt aus der Nadelverschlussdüse gemessen und einer Steuerung zugeführt werden.

Vorzugsweise kann eine Nadelverschlussdüse verwendet werden, bei welcher die Düsennadel eine zumindest abschnittsweise konisch zulaufende Nadelspitze aufweist und bei der das vordere Ende des Gehäuses hierzu passend konisch ausgebildet ist in der Weise, dass die Nadelspitze und das vordere Ende des Gehäuses in der geschlossenen Stellung der Nadelverschlussdüse dicht aneinander anliegen und der Durchfluss von Schmelze unterbrochen ist. Durch das Verfahren der Düsennadel kann der Kanalquerschnitt zwischen den konisch ausgebildeten Flächen von Düsennadel und Gehäuse gemäß dem vorgegebenen Volumenstrom verändert werden.

Weiterhin kann vorgesehen werden, dass vor der Ausführung von Leerfahrten, bei welcher die 3D-Druckdüse und/oder der Drucktisch ohne das Ablegen eines Schmelzestrangs verfahren werden, die Düsennadel zunächst zurückgezogen und nachfolgend in die geschlossene Position verfahren wird. Damit lässt sich ein Nachtropfen von Schmelze aus der 3D-Druckdüse verhindern. Insbesondere durch ein ruckartiges Zurückziehen der Düsennadel kann ein Unterdruck im System erzeugt werden, welcher effektiv ein Nachtropfen von Schmelze aus der 3D-Druckdüse verhindert. Zudem kann somit die Entstehung von Schmelzefäden bei Leerfahrten im 3D-Druck verringert werden.

Erfindungsgemäss wird in Abhängigkeit von der Geometrie der 3D-Druckdüse in der Steuerung oder in einem Computersystem eine Regelkurve hinterlegt und bei der additiven Herstellung des Erzeugnisses diese Regelkurve verwendet, wobei der Kanalquerschnitt in der Nadelverschlussdüse gemäß der Regelkurve verändert wird.

Gemäß einer Ausführungsform kann vorgesehen sein, dass die Schmelze mittels eines Extruders erzeugt wird, welcher in Fluidverbindung mit der Nadelverschlussdüse steht, wobei als Fluidverbindung vorzugsweise ein Rohr oder ein Schlauch verwendet wird. Ebenso kann zwischen dem Extruder und der Nadelverschlussdüse eine Schmelzepumpe vorgesehen werden.

Zur Regelung des Volumenstroms kann auch die Relativgeschwindigkeit zwischen der 3D-Druckdüse und dem Drucktisch verwendet wird.

Eine geeignete Vorrichtung zur Durchführung des Verfahrens ist in Anspruch 8 definiert; sie umfasst eine Einrichtung zur Erzeugung und Bereitstellung einer Schmelze, eine Nadelverschlussdüse, eine 3D-Druckdüse, einen Drucktisch und eine Steuerungseinrichtung. Die Steuerungseinrichtung ist ausgebildet, Antriebe für das Bewegen der 3D-Druckdüse und/oder den Drucktisch in der Weise ansteuern zu können, dass die 3D-Druckdüse und/oder der Drucktisch gemäß einem für das Erzeugnis spezifischen Computerprogramm im Raum verfahren werden können. Die Steuerungseinrichtung ist weiterhin ausgebildet, einen Antrieb zum Verfahren der Düsennadel in der Weise zu betätigen, dass ein vorgegebener Volumenstrom an aus der 3D-Druckdüse ausgetragener Schmelze aufrechterhalten werden kann. Die Nadelverschlussdüse umfasst ein Gehäuse und eine darin verschiebbare Düsennadel, wobei die Düsennadel zwischen einer geschlossenen Stellung, in welcher die Düsennadel an einer Austrittsöffnung der Nadelverschlussdüse anliegt und diese verschließt und einer geöffneten Stellung, in welcher die Düsennadel einen vorgebbaren Abstand zu der Austrittsöffnung aufweist, verfahren werden kann.

Als Steuerungseinrichtung kann ein geeigneter Computer verwendet werden. Insbesondere sollte der Computer ausgebildet sein, die 3D-Druckdüse und/oder den Drucktisch gemäß einem für das Erzeugnis spezifischen Computerprogramm im Raum verfahren zu können, indem die Antriebe zum Verfahren der 3D-Druckdüse und/oder des Drucktischs mit geeigneten Signalen gemäß dem Computerprogramm beaufschlagt werden.

Gemäß einer bevorzugten Ausführungsform weist die Düsennadel eine zumindest abschnittsweise konisch zulaufende Nadelspitze auf und das vordere Ende des Gehäuses ist hierzu passend konisch ausgebildet in der Weise, dass die Nadelspitze und das vordere Ende des Gehäuses in der geschlossenen Stellung der Nadelverschlussdüse dicht aneinander anliegen und der Durchfluss von Schmelze unterbrochen ist. Durch Verfahren der Düsennadel kann der Kanalquerschnitt zwischen den konisch ausgebildeten Flächen von Düsennadel und Gehäuse gemäß einem vorgegebenen Volumenstrom an aus der 3D-Druckdüse ausgetragener Schmelze verändert werden.

Gemäß einer Ausführungsform kann zum Verfahren der Düsennadel ein Gewindespindel-Antrieb vorgesehen sein, welcher vorzugsweise elektromotorisch betätigbar ist. Der Antrieb für das Verfahren der Düsennadel kann dabei als Servomotor mit einem absoluten Messsystem und direkt angekoppelter Gewindespindel ausgeführt sein. Damit kann die Düsennadel stufenlos von der geschlossenen Stellung in eine geöffnete Stellung verfahren werden. Die Dosierung der Schmelze und somit die Aufrechterhaltung eines vorgegebenen Volumenstroms kann durch eine kontinuierliche Verschiebung der Düsennadel in dem Gehäuse und der damit verbundenen Änderung des durchströmbaren Kanalquerschnitts erfolgen.

Zur Erzeugung und Bereitstellung der Schmelze können verschiedenartige an sich bekannte Einrichtungen vorgesehen werden, wie insbesondere ein Einschnecken-Extruder, ein Mehrschnecken-Extruder, eine Schmelzepumpe, ein duroplastisches Mischkopfsystem, ein Scheibenextruder oder ein über Wärmekonvektion aufschmelzendes System.

Gemäß der erfindungsgemässen Vorrichtung sind ein erster Drucksensor zwischen dem Ausgang der Einrichtung zur Erzeugung und Bereitstellung der Schmelze und ein zweiter Drucksensor zwischen dem Ausgang der Nadelverschlussdüse und dem Eingang der 3D-Druckdüse vorgesehen.

Die Signale von dem ersten und dem zweiten Drucksensor können über geeignete Datenleitungen der Steuerungseinrichtung zugeführt und von dieser ausgewertet werden, insbesondere zur Aufrechterhaltung eines vorgegebenen Volumenstroms an Schmelze.

Die Nadelverschlussdüse sollte im Bereich der Austrittsöffnung in geeigneter Weise für die Ankopplung einer 3D-Druckdüse ausgebildet sein, beispielsweise unter Verwendung eines geeignet gestalteten und einen Schmelzekanal aufweisenden Übergabestücks, an welchem die eigentliche 3D-Druckdüse angeschlossen werden kann.

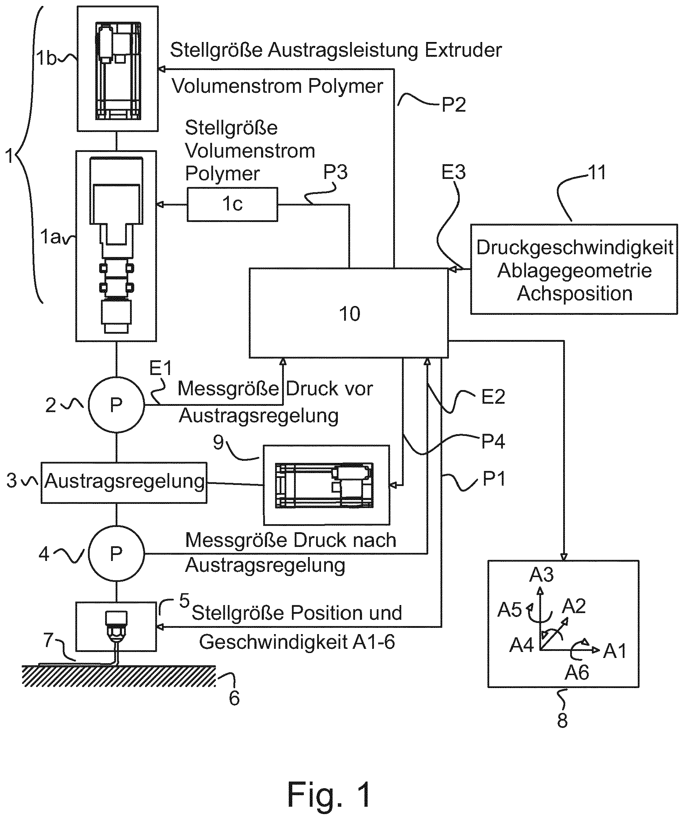

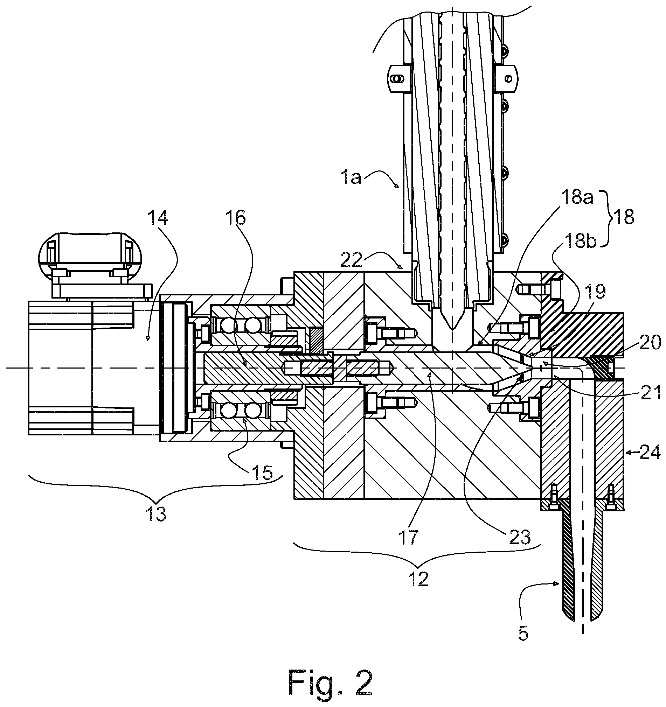

Ein besonderer Vorteil der vorliegenden Erfindung liegt in dem vergleichsweise geringen Gewicht des Druckkopfes bestehend aus einer Einrichtung zur Bereitstellung einer Schmelze, der Einheit zum Regeln des Volumenstroms der Schmelze und der 3D-Druckdüse. Die Einheit zur Regelung des Volumenstroms der Schmelze von herkömmlichen Systemen wird üblicherweise mit schweren und komplexen Schmelzepumpen ausgeführt. Durch Entfall der vergleichsweise schweren Schmelzepumpen können 3D-Druckkinematiken mit reduzierten Steifigkeiten ausgelegt werden. Es können kostengünstige Achsen, eine leichtere Stahlkonstruktion und Antriebe mit geringeren Leistungen verwendet werden. Dies führt insgesamt zu einer Reduzierung der Herstellkosten für einen erfindungsgemäß ausgestalteten 3D-Drucker. Durch das geringe Gewicht bzw. die geringe Massenträgheit kann zudem der 3D-Druckkopf eine höhere Beschleunigung im Druckbetrieb realisieren. Dies führt zu einer Ersparnis an Druckzeit bei der additiven Herstellung des Erzeugnisses. Infolgedessen ergeben sich Kostenvorteile bei der Herstellung eines Erzeugnisses im Vergleich zur Herstellung des gleichen Erzeugnisses mit langsamer arbeitenden 3D-Druckern. Nachfolgend soll die Erfindung anhand eines Ausführungsbeispiels und unter Bezugnahme auf die Figuren 1 und 2 näher erläutert werden. Es zeigen:
Figur 1 Blockschaltbild eines erfindungsgemäßen 3D-Druckers
Figur 2 Nadelverschlussdüse im Längsschnitt

Gemäß der Figur 1 umfasst ein erfindungsgemäßer 3D-Drucker eine an sich bekannte Einrichtung zum Erzeugen und Bereitstellen einer Schmelze. Im Ausführungsbeispiel der Figur 1 handelt es sich um einen Schmelzeextruder 1, umfassend einen Einschnecken-Extruder 1a und einen Antriebsmotor 1b, mit welchem die Schnecke des Einschnecken-Extruders 1a drehangetrieben wird. Als Antriebsmotor kann beispielsweise ein Hydraulikmotor, eine Servomotor oder ein Schrittmotor zum Einsatz kommen. An dem Einschnecken-Extruder 1a ist des Weiteren eine Materialdosiereinrichtung 1c vorgesehen, mit welcher ein aufzuschmelzendes Polymermaterial in den Einschnecken-Extruder 1a eingegeben werden kann. Dem Einschnecken-Extruder 1a nachgeschaltet sind ein erster Drucksensor 2, eine Nadelverschlussdüse 3, ein zweiter Drucksensor 4, eine 3D-Druckdüse 5 sowie ein Drucktisch 6. Aus der 3D-Druckdüse 5 wird in an sich bekannter Weise ein Schmelzestrang 7 ausgetragen und auf dem Drucktisch 6 abgelegt. Die 3D-Druckdüse 5 und/oder der Drucktisch 6 können im Raum entlang den Achsen A1 bis A6 verfahren werden, wie dies in Feld 8 schematisch dargestellt ist. Einzelheiten betreffend die Nadelverschlussdüse sind in der Figur 2 dargestellt und werden dort näher beschrieben. Dargestellt ist jedoch ein Antrieb 9 zum Verfahren der Düsennadel. Weiterhin ist eine Steuerungseinrichtung 10 vorgesehen, welcher unter anderem die Signale der beiden Drucksensoren 2 und 4 zugeführt und von dieser ausgewertet werden. Die Signale der Drucksensoren 2 und 4 werden als Eingangssignale der Steuerungseinrichtung zugeführt, was mit den Pfeilen E1 und E2 veranschaulicht werden soll. Weitere Daten, welche der Steuerungseinrichtung 10 zugeführt werden sind im Feld 11 angegeben und umfassen unter anderem die Druckgeschwindigkeit, die Ablagegeometrie sowie die Achspositionen. Dabei ist die Druckgeschwindigkeit die Verfahrgeschwindigkeit des 3D-Druckkopfes oder auch des 3D-Drucktisches, welche durch die berechnete Bauteilaufbaurate der übergeordneten Maschinensteuerung und der von dem Anwender eingestellten Bauteildruckzeit vorgegeben wird. Die Ablagegeometrie wird durch die geometrische Ausgestaltung und dem schichtweisen Aufbau des zu druckenden Objektes über die Maschinensteuerung definiert. Die Achspositionen 8 der 3D-Druckmaschine werden durch die Maschinensteuerung und des zu druckendes Objektes vorgegeben. Der 3D-Druckkopf 5 oder auch der Drucktisch 6 können in vorzugsweise sechs(6) Achsen A1, A2, A3, A4, A5 und A6 verfahren werden. Die Zuführung dieser Eingangssignale zur Steuerungseinrichtung 10 soll mit dem Pfeil E3 veranschaulicht werden.

Als Steuerungseinrichtung 10 kann ein geeigneter Computer oder auch eine speicherprogrammierbare Steuerung (SPS) verwendet werden. Insbesondere ist der Computer ausgebildet, den 3D-Druckkopf und/oder den Drucktisch gemäß einem für das Erzeugnis spezifischen Computerprogramm im Raum verfahren zu können, indem die hier nicht dargestellten Antriebe zum Verfahren des 3D-Druckkopfes und/oder des Drucktischs mit geeigneten Signalen gemäß der Maschinensteuerung beaufschlagt werden. Die Ansteuerung dieser Antriebe ist mit dem Pfeil P1 veranschaulicht. Die Steuerung gibt des Weiteren Steuerungssignale an den Antriebsmotor 1b (siehe Pfeil P2), an die Materialdosiereinrichtung 1c, (siehe Pfeil P3) und an den Antrieb 9 zum Verfahren der Düsennadel (siehe Pfeil P4).

Der 3D-Drucker ist modular aufgebaut, so dass anstelle des in Figur 1 dargestellten Schneckenschmelzeextruders auch eine andere Einrichtung zur Erzeugung und Bereitstellung einer Schmelze verwendet werden kann. Dabei kann es sich beispielsweise um eine Schmelzepumpe, ein duroplastisches Mischkopfsystem, einen Scheibenextruder oder um ein konventionell über Wärmekonvektion aufschmelzendes System handeln.

Die Figur 2 zeigt eine Nadelverschlussdüse 12 und einen Antrieb 13 zum Verfahren der Düsennadel. Der Antrieb 13 umfasst den Antriebsmotor 14 und ein Getriebe 15. Als Antriebsmotor 13 kann ein Servomotor mit einem Drehgeber verwendet werden. Das Getriebe 15 ist vorliegend als Spindelgetriebe ausgeführt und die Gewindespindel 16 ist unmittelbar mit dem Servomotor 14 wirkverbunden. Die Nadelverschlussdüse 12 umfasst mehrere Gehäusebestandteile und die eigentliche Düsennadel 17. Die Düsennadel 17 steht antriebstechnisch mit der Gewindespindel 16 in Wirkverbindung und kann von dieser beim Betätigen des Servomotors 14 im Gehäuse der Nadelverschlussdüse 12 verfahren werden. Das Gehäuse umfasst ein die Düsennadel 17 umgebendes Gehäusebauteil 18, welches vorliegend zweiteilig ausgeführt ist. Ein erster Gehäusebestandteil 18a ist als Hohlzylinder ausgeführt und der Gewindespindel 16 zugewandt. Ein zweiter Gehäusebestandteil 18b ist auf der der Gewindespindel 16 abgewandten Seite der Nadelverschlussdüse 12 angeordnet. Dieser zweite Gehäusebestandteil 18b verfügt über einen konisch ausgebildeten Abschnitt 19, welcher der Spitze der Düsennadel 17 zugewandt ist und über einen mit einem zylindrischen Querschnitt ausgebildeten und einen Austrittskanal bildenden Abschnitt 20, an dessen Ende eine Austrittsöffnung 21 vorliegt. Der Gehäusebestandteil 18b ist in der Weise gestaltet, dass dort die 3D-Druckdüse 5 befestigt werden kann, beispielsweise mittels eines geeignet gestalteten Übergabestücks 24. Das Übergabestück 24 bildet somit das Anschlussstück der 3D-Druckdüse 5. In dem Gehäuse der Nadelverschlussdüse 12 ist eine Ausnehmung 22 vorgesehen, welche die Schnittstelle zum Einschnecken-Extruder 1a darstellt. Der Einschnecken-Extruder kann mit seinem vorderen Ende direkt an diese Ausnehmung 22 angeschlossen werden oder es kann eine Schmelzeleitung zwischen dem Ausgang des Einschnecken-Extruders 1a und der Ausnehmung 22 angeordnet werden. Über die Ausnehmung 22 kann somit die vom Einschnecken-Extruder 1a erzeugte und bereitgestellte Schmelze der Nadelverschlussdüse 12 zugeführt und über die Austrittsöffnung 21 und das Übergabestück 24 in die 3D-Druckdüse 5 geleitet werden.

Die Düsennadel 17 weist eine konisch zulaufende Nadelspitze auf und das vordere Ende des Gehäuses 12 bzw. der Gehäusebestandteil 18b ist hierzu passend konisch ausgebildet in der Weise, dass die Nadelspitze und das vordere Ende des Gehäuses 12 bzw. der Gehäusebestandteil 18b in der geschlossenen Stellung der Nadelverschlussdüse dicht aneinander anliegen und der Durchfluss von Schmelze durch die Austrittsöffnung 21 unterbrochen ist. Die Düsennadel 17 kann mittels des Antriebs 13 zwischen der geschlossenen Stellung, in welcher die Düsennadel 17 an der Austrittsöffnung 21 anliegt und diese verschließt und einer geöffneten Stellung, in welcher die Düsennadel 17 einen vorgebbaren Abstand zu der Austrittsöffnung 21 aufweist, verfahren werden. Durch das Verfahren der Düsennadel 17 kann der Kanalquerschnitt 23 zwischen den konisch ausgebildeten Flächen der Nadelspitze und dem Gehäusebestandteil 18b verändert werden. Auf diese Weise kann auch der Volumenstrom an Schmelze gemäß einem vorgegebenen Volumenstrom verändert werden.

Nachfolgend soll die Betriebsweise des 3D-Druckers beschrieben werden. Über Parameter wie Druckgeschwindigkeit, Ablagegeometrie und Achsposition übersetzt die Steuerungseinrichtung 10 die Verfahrgeschwindigkeit und Positionen der Mehrachskinematik. Hierbei kann die 3D-Druckdüse 5 und/oder der Drucktisch 6 entlang dem Mehrachsensystem (siehe Feld 8 in der Figur 1) bewegt werden.

Über die Geometrie des Schmelzestrangs 7 und die Verfahrgeschwindigkeit von 3D-Druckdüse 5 und/oder Drucktisch 6 wird ein Volumenstrom an erforderlicher Schmelze für die additive Herstellung des gewünschten Erzeugnisses vorgegeben. Durch Abgleich des Drucks zwischen dem ersten Drucksensor 2 nach dem Einschnecken-Extruder 1a und dem zweiten Drucksensor 4 vor der 3D-Druckdüse 5 wird der Regelparameter für die Querschnittsänderung des Kanalquerschnitts 23 abgeleitet. Ebenfalls wird die Plastifiziergeschwindigkeit des Einschnecken-Extruders 1a angepasst, um einen Materialstau und ein Rückfluten im System zu verhindern. Die Regelung des Volumenstroms erfolgt über den variablen Kanalquerschnitt 23 und den dabei einhergehenden Druckverlust. Gemäß der Geometrie der 3D-Druckdüse 5 wird der Steuerungseinrichtung 10 eine Regelkurve hinterlegt, welche den Kanalquerschnitt 23, die Drehzahl des Einschnecken-Extruders 1a, den Druck am zweiten Drucksensor 4 und die empirisch ermittelte Austragsleistung (Volumenstrom der Schmelze) gegenüberstellt.

Durch komplettes Schließen des Kanalquerschnitts 23 kann der Austrag an Schmelze gestoppt werden. Ein Nachtropfen von Schmelze aus der 3D-Druckdüse 5 wird dadurch verhindert. Durch ruckartiges Zurückziehen der Düsennadel 17 kann ein Unterdruck im System erzeugt werden, welcher effektiv ein Nachtropfen von Schmelze aus der 3D-Druckdüse 5 verhindert, insbesondere bei schnellen Leerfahrten, d.h. bei Fahren, bei welcher der 3D-Druckkopf und/oder der Drucktisch ohne das Ablegen eines Schmelzestrangs 7 verfahren werden. Durch dieses Verfahren wird ebenfalls die Entstehung von Schmelzefäden bei Leerfahrten im 3D-Druck verhindert.

### Bezugszeichenliste

- 1: Schneckenschmelzextruder
- 1a: Einschnecken-Extruder
- 1b: Extruder-Antriebsmotor
- 1c: Materialdosiereinrichtung
- 2: Erster Drucksensor
- 3: Blockbild der Nadelverschlussdüse
- 4: Zweiter Drucksensor
- 5: 3D-Druckdüse
- 6: Drucktisch
- 7: Schmelzestrang
- 8: Mehrachsensystem
- 9: Antrieb für Düsennadel
- 10: Steuerungseinrichtung (SPS) bzw. Computer
- 11: Blockschaltbild für Eingabegröße
- 12: Nadelverschlussdüse
- 13: Düsennadel-Antrieb
- 14: Servomotor
- 15: Spindelgetriebe
- 16: Gewindespindel
- 17: Düsennadel
- 18: Gehäuse
- 18a: Spindelseitiger Gehäusebestandteil
- 18b: 3D-Druckdüsen-seitiger Gehäusebestandteil
- 19: Konischer Abschnitt des Gehäusebestandteils 18b
- 20: Zylindrischer Abschnitt des Gehäusebestandteils 18b
- 21: Austrittsöffnung
- 22: Ausnehmung bzw. Schnittstelle zum Einschnecken-Extruder 1a
- 23: Kanalquerschnitt
- 24: Übergabestück
- E1-E3: Eingangsgrößen
- P1- P4: Steuerungssignale bzw. Ausgangsgrößen

## Patentansprüche

1. Verfahren zur additiven Herstellung eines Erzeugnisses, wobei eine Schmelze über eine 3D-Druckdüse (5) ausgetragen und die Schmelze in Form eines Schmelzestrangs (7) zur Ausbildung des Erzeugnisses auf einem Drucktisch (6) abgelegt wird, wobei die 3D-Druckdüse (5) und/oder der Drucktisch (6) gemäß einem für das Erzeugnis spezifischen Computerprogramm im Raum verfahren werden, wobei die Schmelze über eine Nadelverschlussdüse (3, 12), aufweisend ein Gehäuse (18) und eine darin verschiebbare Düsennadel (17), der 3D-Druckdüse (5) zugeleitet wird, wobei die Düsennadel (17) zwischen einer geschlossenen Stellung, in welcher die Düsennadel (17) an einer mit der 3D-Druckdüse (5) in Fluidverbindung stehenden Austrittsöffnung (21) des Gehäuses (18) anliegt und diese Austrittsöffnung (21) verschließt und einer geöffneten Stellung, in welcher die Düsennadel (17) einen vorgebbaren Abstand zu der Austrittsöffnung (21) des Gehäuses (18) aufweist, während der Durchführung des Druckvorgangs verfahren wird, wobei für die additive Herstellung des Erzeugnisses ein aus der 3D-Druckdüse (5) austretender Volumenstrom an Schmelze vorgegeben ist, welcher durch die Gestalt der Austrittsöffnung der 3D-Druckdüse und somit der Geometrie des abzulegenden Schmelzestrangs (7) einerseits und die Verfahrgeschwindigkeit der 3D-Druckdüse (5) und/oder des Drucktischs (6) andererseits vorgegeben ist, wobei die Düsennadel (17) während der Durchführung des Druckvorgangs in der Weise zwischen der geschlossenen Stellung und der geöffneten Stellung verfahren wird, dass während der additiven Herstellung des Erzeugnisses der vorgegebene Volumenstrom an aus der 3D-Druckdüse (5) ausgetragener Schmelze aufrechterhalten wird, **dadurch gekennzeichnet, dass** in Abhängigkeit von der Geometrie der 3D-Druckdüse (5), insbesondere von der Gestalt der Austrittsöffnung der 3D-Druckdüse und somit der Geometrie des abzulegenden Schmelzestrangs (7), in der Steuerung oder in einem Computersystem eine Regelkurve hinterlegt ist und bei der additiven Herstellung des Erzeugnisses diese Regelkurve verwendet wird, wobei der Kanalquerschnitt (23) gemäß der Regelkurve verändert wird.

2. Verfahren nach Anspruch 1,
**dadurch gekennzeichnet, dass**
zur Regelung des Volumenstroms der Druck der Schmelze vor Eintritt der Schmelze in die Nadelverschlussdüse (3, 12) und der Druck der Schmelze nach Austritt aus der Nadelverschlussdüse (3, 12) gemessen und einer Steuerung zugeführt werden.

3. Verfahren nach Anspruch 1 oder 2,
**dadurch gekennzeichnet, dass**
eine Nadelverschlussdüse (3, 12) verwendet wird, bei welcher die Düsennadel (17) eine zumindest abschnittsweise konisch zulaufende Nadelspitze aufweist, dass das vordere Ende des Gehäuses (18) hierzu passend konisch (19) ausgebildet ist in der Weise, dass die Nadelspitze und das vordere Ende des Gehäuses (18, 18b) in der geschlossenen Stellung der Nadelverschlussdüse (3, 12) dicht aneinander anliegen und der Durchfluss von Schmelze unterbrochen ist, und dass durch das Verfahren der Düsennadel (17) der Kanalquerschnitt (23) zwischen den konisch ausgebildeten Flächen von Düsennadel (17) und Gehäuse (18, 18b) gemäß dem vorgegebenen Volumenstrom verändert wird.

4. Verfahren nach einem der vorstehenden Ansprüche,
**dadurch gekennzeichnet, dass**
vor der Ausführung von Leerfahrten, bei welcher die 3D-Druckdüse (5) und/oder der Drucktisch (6) ohne das Ablegen eines Schmelzestrangs (7) verfahren werden, die Düsennadel (17) zunächst zurückgezogen und nachfolgend in die geschlossene Position verfahren wird.

5. Verfahren nach einem der vorstehenden Ansprüche,
**dadurch gekennzeichnet, dass**
die Schmelze mittels eines Extruders (1) erzeugt wird, welcher in Fluidverbindung mit der Nadelverschlussdüse (3, 12) steht, wobei als Fluidverbindung vorzugsweise ein Rohr oder ein Schlauch verwendet wird.

6. Verfahren nach einem der vorstehenden Ansprüche,
**dadurch gekennzeichnet,**
**dass** zwischen dem Extruder (1) und der Nadelverschlussdüse (3, 12) eine Schmelzepumpe vorgesehen ist.

7. Verfahren nach einem der vorstehenden Ansprüche,
**dadurch gekennzeichnet, dass**
dass zur Regelung des Volumenstroms die Relativgeschwindigkeit zwischen der 3D-Druckdüse (5) und dem Drucktisch (6) verwendet wird.

8. Vorrichtung zur Durchführung des Verfahrens nach einem der Ansprüche 1 bis 7, umfassend eine Einrichtung zur Erzeugung und Bereitstellung einer Schmelze, eine Nadelverschlussdüse (3, 12), eine 3D-Druckdüse (5), einen Drucktisch (6) und eine Steuerungseinrichtung (10), wobei die Steuerungseinrichtung (10) ausgebildet ist, Antriebe für das Bewegen der 3D-Druckdüse (5) und/oder den Drucktisch (6) in der Weise ansteuern zu können, dass die 3D-Druckdüse (5) und/oder der Drucktisch (6) gemäß einem für das Erzeugnis spezifischen Computerprogramm im Raum verfahren werden können, wobei die Steuerungseinrichtung (10) ausgebildet ist, einen Antrieb (9, 13) zum Verfahren der Düsennadel (17) in der Weise zu betätigen, dass ein vorgegebener Volumenstrom an aus der 3D-Druckdüse (5) ausgetragener Schmelze aufrechterhalten werden kann, und wobei ein erster Drucksensor (2) zwischen dem Ausgang der Einrichtung zur Erzeugung und Bereitstellung der Schmelze und ein zweiter Drucksensor (4) zwischen dem Ausgang der Nadelverschlussdüse (3, 12) und dem Eingang der 3D-Druckdüse (5) vorgesehen ist, und dass die Signale von dem ersten und dem zweiten Drucksensor der Steuerungseinrichtung (10) zuführbar und von dieser auswertbar sind.

9. Vorrichtung nach Anspruch 8,
**dadurch gekennzeichnet, dass**
die Nadelverschlussdüse (3, 12) ein Gehäuse (18, 18a, 18b) und eine darin verschiebbare Düsennadel (17) aufweist, wobei die Düsennadel (17) zwischen einer geschlossenen Stellung, in welcher die Düsennadel (17) an einer Austrittsöffnung (21) der Nadelverschlussdüse (3, 12) anliegt und diese verschließt und einer geöffneten Stellung, in welcher die Düsennadel (17) einen vorgebbaren Abstand zu der Austrittsöffnung (21) aufweist, verfahren werden kann.

10. Vorrichtung nach Anspruch 8 oder 9,
**dadurch gekennzeichnet, dass**
die Düsennadel (17) eine zumindest abschnittsweise konisch zulaufende Nadelspitze aufweist, dass das vordere Ende des Gehäuses hierzu passend konisch (19) ausgebildet ist in der Weise, dass die Nadelspitze und das vordere Ende des Gehäuses (18, 18b) in der geschlossenen Stellung der Nadelverschlussdüse (3, 12) dicht aneinander anliegen und der Durchfluss von Schmelze unterbrochen ist, und dass durch das Verfahren der Düsennadel (17) der Kanalquerschnitt (23) zwischen den konisch ausgebildeten Flächen von Düsennadel (17) und Gehäuse (18, 18b) gemäß einem vorgegebenen Volumenstrom an aus der 3D-Druckdüse (5) ausgetragener Schmelze veränderbar ist.

11. Vorrichtung nach Anspruch 8-10,
**dadurch gekennzeichnet, dass**
zum Verfahren der Düsennadel (17) ein Gewindespindel-Antrieb (15, 16) vorgesehen ist, welcher vorzugsweise elektromotorisch (14) betätigbar ist.

12. Vorrichtung nach Anspruch 8-11,
**dadurch gekennzeichnet, dass**
zur Erzeugung und Bereitstellung der Schmelze ein Einschnecken-Extruder, ein Mehrschnecken-Extruder, eine Schmelzepumpe, ein duroplastisches Mischkopfsystem, ein Scheibenextruder oder ein über Wärmekonvektion aufschmelzendes System vorgesehen ist.

13. Vorrichtung nach Anspruch 8-12,
**dadurch gekennzeichnet, dass**
die Nadelverschlussdüse (3, 12) im Bereich der Austrittsöffnung (21) für die Ankopplung der 3D-Druckdüse (5) ausgebildet ist.

## Claims

1. A method for the additive manufacture of a product, wherein a melt is discharged via a 3D printing nozzle (5) and the melt is deposited in the form of a melt strand (7) in order to form the product on a printing table (6), wherein the 3D printing nozzle (5) and/or the printing table (6) are moved in space in accordance with a computer program which is specific for the product,
wherein the melt is directed to the 3D printing nozzle (5) via a needle valve nozzle (3,12) having a housing (18) and a nozzle needle (17) which can be displaced therein, wherein, while carrying out the printing procedure, the nozzle needle (17) is moved between a closed position, in which the nozzle needle (17) lies against an outlet opening (21) of the housing (18) which is in fluid connection with the 3D printing nozzle (5) and which closes this outlet opening (21), and an open position, in which the nozzle needle (17) has a distance from the outlet opening (21) of the housing (18) which can be specified, wherein, for the additive manufacture of the product, a volumetric flow of melt being discharged from the 3D printing nozzle (5) is specified, which is specified by the shape of the outlet opening of the 3D printing nozzle and therefore of the geometry of the melt strand (7) to be deposited on the one hand, and the speed of movement of the 3D printing nozzle (5) and/or of the printing table (6) on the other hand, wherein the nozzle needle (17) is moved between the closed position and the open position while carrying out the printing procedure in a manner such that during the additive manufacture of the product, the specified volumetric flow of melt being discharged from the 3D printing nozzle (5) is maintained,
**characterized in that**
as a function of the geometry of the 3D printing nozzle (5), in particular of the shape of the outlet opening of the 3D printing nozzle and thus of the geometry of the melt strand to be deposited, a control curve is stored in the controller or in a computer system, and this control curve is used during the additive manufacture of the product, wherein the channel cross-section (23) is altered in accordance with the control curve.

2. The method according to Claim 1,
**characterized in that**
in order to regulate the volumetric flow, the pressure of the melt before the melt enters the needle valve nozzle (3,12) and the pressure of the melt after exit from the needle valve nozzle (3,12) are measured and delivered to a controller.

3. The method according to Claim 1 or 2,
**characterized in that**
a needle valve nozzle (3,12) is used in which the nozzle needle (17) has a needle tip which tapers conically at least in sections, that for this purpose the front end of the housing (18) is appropriately conical (19) in configuration in a manner such that the needle tip and the front end of the housing (18,18b) lie close against one another in the closed position of the needle valve nozzle (3,12) and the throughflow of melt is interrupted, and that by moving the nozzle needle (17) the channel cross section (23) between the conically configured surfaces of the nozzle needle (17) and housing (18,18b) is altered in accordance with the specified volumetric flow.

4. The method according to one of the preceding claims, **characterized in that**
prior to carrying out dry runs in which the 3D printing nozzle (5) and/or the printing table (6) are moved without depositing a melt strand (7), the nozzle needle (17) is initially retracted and subsequently moved into the closed position.

5. The method according to one of the preceding claims, **characterized in that**
the melt is produced by means of an extruder (1) which is in fluid connection with the needle valve nozzle (3,12), wherein preferably a pipe or a tube is used as fluid connection.

6. The method according to one of the preceding claims, **characterized in that**
a melt pump is provided between the extruder (1) and the needle valve nozzle (3,12).

7. The method according to one of the preceding claims, **characterized in that**
the relative velocity between the 3D printing nozzle (5) and the printing table (6) is used in order to regulate the volumetric flow.

8. An apparatus for carrying out the method according to one of Claims 1 to 7, comprising a device for producing and providing a melt, a needle valve nozzle (3,12), a 3D printing nozzle (5), a printing table (6) and a control device (10), wherein the control device (10) is configured to be capable of controlling drives for moving the 3D printing nozzle (5) and/or the printing table (6) in a manner such that the 3D printing nozzle (5) and/or the printing table (6) can be moved in space in accordance with a computer program which is specific for the product, wherein the control device (10) is configured to actuate a drive (9,13) for moving the nozzle needle (17) in a manner such that a specified volumetric flow of melt being discharged from the 3D printing nozzle (5) can be maintained, and wherein a first pressure sensor (2) is provided between the outlet from the device for producing and providing the melt, and a second pressure sensor (4) is provided between the outlet from the needle valve nozzle (3,12) and the inlet to the 3D printing nozzle (5), and that the signals from the first and from the second pressure sensor can be delivered to the control device (10) and can be evaluated by it.

9. The apparatus according to Claim 8,
**characterized in that**
the needle valve nozzle (3,12) comprises a housing (18,18a,18b) and a nozzle needle (17) which can be displaced therein, wherein the nozzle needle (17) can be moved between a closed position, in which the nozzle needle (17) lies against an outlet opening (21) of the needle valve nozzle (3,12) and closes it, and an open position, in which the nozzle needle (17) has a specifiable distance from the outlet opening (21).

10. The apparatus according to Claim 8 or 9, **characterized in that**
the nozzle needle (17) has a needle tip which tapers conically at least in sections, that for this purpose the front end of the housing is appropriately conical (19) in configuration in a manner such that in the closed position of the needle valve nozzle (3,12) the needle tip and the front end of the housing (18,18b) lie close against one another and the throughflow of melt is interrupted, and that by moving the nozzle needle (17), the channel cross section (23) between the conically configured surfaces of the nozzle needle (17) and housing (18,18b) can be altered in accordance with a specified volumetric flow of melt being discharged from the 3D printing nozzle (5).

11. The apparatus according to Claim 8-10, **characterized in that**
in order to move the nozzle needle (17), a threaded spindle drive (15,16) is provided, which can preferably be actuated by means of an electric motor (14) .

12. The apparatus according to Claim 8-11, **characterized in that**
in order to produce and provide the melt, a single screw extruder, a multiple screw extruder, a melt pump, a thermoset mixing head system, a disk extruder or a system melting by heat convection is provided.

13. The apparatus according to Claim 8-12, **characterized in that**
in the region of the outlet opening (21), the needle valve nozzle (3,12) is configured for coupling of the 3D printing nozzle (5).

## Revendications

1. Procédé de fabrication additive d'un produit, dans lequel une masse fondue est sortie par le biais d'une buse d'impression 3D (5) et la masse fondue est déposée sur une table de pression (6) sous forme d'un brin de masse fondue (7) pour former le produit, dans lequel la buse d'impression 3D (5) et/ou la table de pression (6) sont déplacées dans l'espace selon un programme informatique spécifique au produit,
dans lequel la masse fondue est amenée vers la buse d'impression 3D (5) par une buse à obturateur à aiguille (3, 12), présentant un boîtier (18) et une aiguille de buse (17) mobile à l'intérieur, dans lequel l'aiguille de buse (17) est déplacée pendant l'exécution de la procédure d'impression entre une position fermée dans laquelle l'aiguille de buse (17) repose contre une ouverture de sortie (21) du boîtier (18) en liaison fluidique avec la buse d'impression 3D (5) et ferme cette ouverture de sortie (21), et une position ouverte, dans laquelle l'aiguille de buse (17) présente un écart pouvant être prédéfini par rapport à l'ouverture de sortie (21) du boîtier (18), dans lequel un débit volumique de masse fondue sortant de la buse d'impression 3D (5) est prédéfini pour la fabrication additive du produit, lequel est prédéfini d'une part par la forme de l'ouverture de sortie de la buse d'impression 3D et ainsi de la géométrie du brin de masse fondue (7) à déposer et d'autre part par la vitesse de déplacement de la buse d'impression 3D (5) et/ou de la table de pression (6), dans lequel l'aiguille de buse (17) est déplacée entre la position fermée et la position ouverte pendant l'exécution de la procédure d'impression, de telle sorte que pendant la fabrication additive du produit, le débit volumique prédéfini de masse fondue sortie de la buse d'impression 3D (5) est maintenu, **caractérisé en ce qu'**en fonction de la géométrie de la buse d'impression 3D (5), en particulier de la forme de l'ouverture de sortie de la buse d'impression 3D et ainsi de la géométrie du brin de masse fondue (7) à déposer, une courbe de régulation est consignée dans la commande ou dans un système informatique et lors de la fabrication additive du produit, cette courbe de régulation est appliquée, dans lequel la section de canal (23) est modifiée en fonction de la courbe de régulation.

2. Procédé selon la revendication 1,
**caractérisé en ce que**
pour réguler le débit volumique, la pression de la masse fondue avant l'entrée de la masse fondue dans la buse à obturateur à aiguille (3, 12) et la pression de la masse fondue après la sortie hors de la buse à obturateur à aiguille (3, 12) sont mesurées et une commande est exécutée.

3. Procédé selon la revendication 1 ou 2,
**caractérisé en ce qu'**une buse à obturateur à aiguille (3, 12) est employée, avec laquelle l'aiguille de buse (17) présente une pointe d'aiguille conique au moins par tronçons, que l'extrémité avant du boîtier (18) est formée conique (19) pour s'y adapter de façon à ce que la pointe d'aiguille et l'extrémité avant du boîtier (18, 18b) dans la position fermée de la buse à obturateur à aiguille (3, 12), reposent étroitement l'un contre l'autre et que le passage de la masse fondue soit interrompu, et que par le déplacement de l'aiguille de buse (17), la section de canal (23) entre les surfaces coniques de l'aiguille de buse (17) et le boîtier (18, 18b) est modifiée conformément au débit volumique prédéfini.

4. Procédé selon l'une des revendications précédentes, **caractérisé en ce que**
avant d'exécuter des marches à vide, pendant lesquelles la buse d'impression 3D (5) et/ou la table de pression (6) sont déplacées sans dépôt de brin de masse fondue (7), l'aiguille de buse (17) est d'abord rétractée et déplacée ensuite dans la position fermée.

5. Procédé selon l'une des revendications précédentes, **caractérisé en ce que**
la masse fondue est produite au moyen d'une extrudeuse (1), laquelle est en liaison fluidique avec la buse à obturateur à aiguille (3, 12), dans lequel un tube ou un tuyau est utilisé de préférence en tant que liaison fluidique.

6. Procédé selon l'une des revendications précédentes, **caractérisé en ce qu'**une pompe à masse fondue est prévue entre l'extrudeuse (1) et la buse à obturateur à aiguille (3, 12).

7. Procédé selon l'une des revendications précédentes, **caractérisé en ce que** pour réguler le débit volumique, la vitesse relative entre la buse d'impression 3D (5) et/ou la table de pression (6) est employée.

8. Dispositif pour exécuter le procédé selon l'une des revendications 1 à 7, comprenant un dispositif de production et de fourniture d'une masse fondue, une buse à obturateur à aiguille (3, 12), une buse d'impression 3D (5), une table de pression (6) et un dispositif de commande (10), dans lequel le dispositif de commande (10) est formé pour pouvoir commander des entraînements pour faire bouger la buse d'impression 3D (5) et/ou la table de pression (6) de telle manière que la buse d'impression 3D (5) et/ou la table de pression (6) puissent être déplacées dans l'espace selon un programme informatique spécifique au produit, dans lequel le dispositif de commande (10) est conçu pour actionner un entraînement (9, 13) pour déplacer l'aiguille de buse (17) de façon à ce qu'un débit volumique prédéfini de masse fondue sortie de la buse d'impression 3D (5) puisse être maintenu, et dans lequel un premier capteur de pression (2) entre la sortie du dispositif pour produire et fournir la masse fondue et un second capteur de pression (4) entre la sortie de la buse à obturateur à aiguille (3, 12) et l'entrée de la buse d'impression 3D (5) sont prévus, et que les signaux puissent être amenés du premier capteur de pression et du second capteur de pression vers le dispositif de commande (10) et évalués par celui-ci.

9. Dispositif selon la revendication 8,
**caractérisé en ce que** la buse à obturateur à aiguille (3, 12) présente un boîtier (18, 18a, 18b) et une aiguille de buse (17) mobile à l'intérieur, dans lequel l'aiguille de buse (17) peut être déplacée entre une position fermée dans laquelle l'aiguille de buse (17) repose contre une ouverture de sortie (21) de la buse à obturateur à aiguille (3, 12) et ferme celle-ci, et une position ouverte, dans laquelle l'aiguille de buse (17) présente un écart pouvant être prédéfini par rapport à l'ouverture de sortie (21).

10. Dispositif selon la revendication 8 ou 9, **caractérisé en ce que** l'aiguille de buse (17) présente une pointe d'aiguille conique au moins par tronçons, que l'extrémité avant du boîtier est formée conique (19) en s'y adaptant de façon à ce que la pointe d'aiguille et l'extrémité avant du boîtier (18, 18b) dans la position fermée de la buse à obturateur à aiguille (3, 12) reposent étroitement l'une contre l'autre et que le passage de la masse fondue soit interrompu, et que par le déplacement de l'aiguille de buse (17), la section de canal (23) entre les surfaces coniques de l'aiguille de buse (17) et le boîtier (18, 18b) puisse être modifiée conformément à un débit volumique prédéfini de masse fondue sortie de la buse d'impression 3D (5).

11. Dispositif selon les revendications 8-10, **caractérisé en ce que** pour déplacer l'aiguille de buse (17), il est prévu un entraînement par tige filetée (15, 16), lequel peut être actionné de préférence par un moteur électrique (14).

12. Dispositif selon les revendications 8-11, **caractérisé en ce que** pour produire et fournir la masse fondue, une extrudeuse mono-vis, une extrudeuse à plusieurs vis, une pompe à masse fondue, un système de tête de mélange à résine thermodurcissable, une extrudeuse à disque ou un système de fonte par convection de la chaleur est employé.

13. Dispositif selon les revendications 8-12, **caractérisé en ce que** la buse à obturateur à aiguille (3, 12) est formée, au niveau de l'ouverture de sortie (21), pour le couplage de la buse d'impression 3D (5).
